# EUROPÄISCHE PATENTSCHRIFT

(11) **EP 1 674 541 B1**
(45) Veröffentlichungstag und Bekanntmachung des Hinweises auf die Patenterteilung: **11.04.2007**
(21) Anmeldenummer: 05027966.0
(22) Anmeldetag: 20.12.2005
(51) Int. Cl.: C09J 5/00, C09J 9/00, F16B 11/00

(54) **Klebeverbindung zum Verbinden von Bauteilen von Verkehrsmitteln, insbesondere von Luftfahrzeugen, sowie Verfahren zur Ermittlung einer mechanischen Mindestbelastbarkeit und/oder einer mechanischen Festigkeit einer Klebeverbindung**
Adhesive joint for connecting components of transportation, particularly of aircrafts, as well as the process for the determination of a mechanical minimum stress and/or a mechanical strength of an adhesive joint
Joint adhésif pour fixer des éléments dans des moyens de transports, en particulier dans un avion, et procédé pour la détermination de la force mécanique minimum et/ou de la résistance mécanique d'un joint adhésif

(30) Priorität: 22.12.2004 DE 102004063098
(43) Veröffentlichungstag der Anmeldung: 28.06.2006
(73) Patentinhaber: Airbus Deutschland GmbH (HRB 43527), 21129 Hamburg (DE)
(72) Erfinder: Law, Barnaby, 28844 Weyhe (DE); Breuer, Ulf, 28879 Grasberg (DE)
(74) Vertreter: Dilg, Andreas

(56) Entgegenhaltungen:
- WO-A-87/02745

## Beschreibung

Die Erfindung betrifft eine Klebeverbindung zum Verbinden von Bauteilen von Verkehrsmitteln, insbesondere von Luftfahrzeugen, wobei die Klebeverbindung mit einem Klebemittel gebildet ist.

Weiterhin betrifft die Erfindung ein Verfahren zur Ermittlung einer mechanischen Mindestbelastbarkeit und/oder einer mechanischen Festigkeit einer Klebeverbindung zur Verbindung von Bauteilen von Verkehrsmitteln, insbesondere von Luftfahrzeugen, wobei in der mit einem Klebemittel gebildeten Klebeverbindung mehrere Funktionselemente mit aktuatorischen und/oder sensorischen Eigenschaften integriert sind.

Insbesondere im Flugzeugbau werden zunehmend Bauteile durch Verkleben verbunden, um einerseits den Produktionsprozess zu vereinfachen und anderseits im Verhältnis zu konventionellen Niet- und/oder Schweißverbindungen Gewicht einzusparen. Sehr aufwändig gestaltet sich bislang in diesem Zusammenhang die Überwachung der Einhaltung der Festigkeitswerte der zwischen den Bauteilen hergestellten Klebeverbindungen.

Nach Maßgabe des Standes der Technik kann die tatsächliche mechanische Belastbarkeit von Klebeverbindungen zwischen Bauteilen beispielsweise durch mechanische Zugversuche geprüft werden.

Bei einer derartigen zerstörenden Prüfung einer Klebeverbindung wird die auf die mittels der Klebeverbindung verbundenen Bauteile wirkende Kraft mittels einer Mess- und Prüfeinrichtung solange gesteigert, bis die Klebeverbindung mechanisch versagt, sodass die Bauteile nicht mehr verwendet werden können.
Diese Vorgehensweise ist insbesondere zur Ermittlung und Festlegung geeigneter grundlegender Verfahrensparameter, wie beispielsweise Druck, Temperatur und deren zeitliche Einwirkdauer, bei der Herstellung von Klebeverbindungen zwischen Bauteilen vorteilhaft einsetzbar. Darüber hinaus ist diese Vorgehensweise auch für eine stichprobenartige Überprüfung der maximalen mechanischen Belastbarkeit von Klebeverbindungen geeignet, wobei sich das Problem der mangelnden Repräsentanz in Bezug auf die Gesamtzahl der hergestellten Klebeverbindungen ergeben kann. Außerdem sind die in der Regel sehr teuren zerstörten Bauteile dann nicht mehr für die weitere Montage bzw. den weiteren Betrieb geeignet, sodass dieses zerstörende Prüfverfahren zur durchgängigen Qualitätssicherung der laufenden Produktion ungeeignet ist.

Bei weiteren Prüfmethoden, wie zum Beispiel Belastungsversuchen, werden zwei durch die Klebeverbindung verbundene Bauteile in eine aufwändige Mess- und Prüfeinrichtung eingespannt, wobei die auf die Klebeverbindung wirkende Kraft durch die Mess- und Prüfeinrichtung nur so weit gesteigert wird, dass sich innerhalb der Klebeverbindung eine vorher festgelegte mechanische Spannung einstellt, die ein Versagen der Klebeverbindung unter allen denkbaren späteren Betriebszuständen mit einer ausreichend hohen Wahrscheinlichkeit ausschließt.
Die Durchführung von derartigen zerstörungsfreien Belastungsversuchen mit umfangreichen Mess- und Prüfeinrichtungen würde zwar die Sicherstellung der Qualität von geklebten Bauteilen während der laufenden Produktion beeinflussen, gestaltet sich aber in der Praxis zu aufwändig, weil beispielsweise für unterschiedliche Bauteile spezielle Adaptionsvorrichtungen bereitgehalten werden müssten, damit die Bauteile möglichst in nur einer Mess- und Prüfeinrichtung mit jeweils vergleichbaren und definierten Kräften beaufschlagt werden könnten.

Auch Ultraschall- oder Röntgenuntersuchungen an Klebeverbindungen können die Durchführung von Belastungsversuchen nicht in vollem Umfang ersetzen, weil hiermit zwar beispielsweise Kavitäten oder Delaminationen zerstörungsfrei detektierbar sind, aber keine zuverlässigen Aussagen über die tatsächliche mechanische Belastbarkeit der Klebeverbindung getroffen werden können.

Darüber hinaus gestaltet sich eine Überprüfung der mechanischen Festigkeit einer Klebeverbindung, zum Beispiel durch Zugversuche, an schwer zugänglichen Bauteilen in der praktischen Ausführung äußerst schwierig.

Aus WO 87/02745 ist eine überlappende Klebeverbindung bekannt, welche gegenseitig überlappende erste und zweite Teile und eine dazwischen liegende Klebeschicht aufweist.

Aufgabe der Erfindung ist es eine Klebeverbindung bereitzustellen, deren mechanische Mindestbelastbarkeit und/oder mechanische Festigkeit sich auf einfache Art und Weise nach ihrer Herstellung, ohne aufwändige Prüf- und Messeinrichtungen zur Durchführung von Festigkeits- und/oder Belastbarkeitsuntersuchungen, unmittelbar mit der Klebeverbindung selbst überprüfen lässt. Weiterhin ist es Aufgabe der Erfindung, mechanische Belastungszustände unmittelbar in der Klebeverbindung zu erfassen.

Diese Aufgabe wird durch eine Vorrichtung mit den Merkmalen des Patentanspruchs 1 gelöst. Dadurch, dass das Klebemittel mehrere Funktionselemente mit aktuatorischen und/oder sensorischen Eigenschaften aufweist, insbesondere um eine mechanische Mindestbelastbarkeit der Klebeverbindung und/oder die Erfassung eines mechanischen Belastungszustandes in der Klebeverbindung zu ermöglichen,
ist eine einfache und unmittelbare Überprüfbarkeit der mechanischen Belastbarkeit von mittels der erfindungsgemäßen Klebeverbindung verbundenen Bauteilen durch die Klebeverbindung selbst möglich. Die Überprüfung der mechanischen Belastbarkeit der mittels der erfindungsgemäßen Klebeverbindung verbundenen Bauteile erfolgt bevorzugt zerstörungsfrei. Mittels der Funktionselemente ist darüber hinaus auch eine Festigkeitsprüfung der Klebeverbindung möglich. Ferner lassen sich mittels der Funktionselemente mechanische Belastungszustände in der Klebeverbindung erfassen.

Nach Maßgabe einer vorteilhaften Ausgestaltung der erfindungsgemäßen Klebeverbindung ist mittels der Funktionselemente ein Steuersignal in eine mechanische Spannung innerhalb der Klebeverbindung umwandelbar, um eine mechanische Mindestbelastbarkeit der Klebeverbindung zu ermitteln und/oder mittels der Funktionselemente ist eine mechanische Spannung in der Klebeverbindung in ein Messsignal umwandelbar, um einen mechanischen Belastungszustand in der Klebeverbindung zu erfassen.
Diese Ausgestaltung der erfindungsgemäßen Klebeverbindung ermöglicht eine Ansteuerung der Funktionselemente bzw. eine Auswertung von durch die Funktionselemente abgegebenen Messsignalen mittels einer vorzugsweise automatisch arbeitenden Steuer- und Regeleinrichtung.

In einer weiteren Ausführungsform ist vorgesehen, dass im Bereich der Funktionselemente zur Zuleitung und/oder Ableitung des Steuersignals und/oder des Messsignals Kontaktelemente angeordnet sind.
Hierdurch ist eine sichere elektrische Verbindung der Funktionselemente mit der Steuer- und Regeleinrichtung gegeben.

Eine weitere vorteilhafte Ausgestaltung sieht vor, dass das Steuersignal und/oder das Messsignal berührungslos übertragbar ist.
Infolge der berührungslosen Ankopplung des Steuersignals und/oder des Messsignals an die Steuer- und Regeleinrichtung ist eine besonders komfortable Messung einer mechanischen Mindestbelastbarkeit der Klebeverbindung und/oder die Erfassung eines mechanischen Belastungszustandes in der Klebeverbindung selbst an schwer zugänglichen Stellen möglich.

Eine weitere vorteilhafte Ausgestaltung der erfindungsgemäßen Klebeverbindung sieht vor, dass das Steuersignal eine elektrische Spannung und/oder ein elektrischer Strom ist. Hierdurch kann das Steuersignal in der Steuer- und Regeleinrichtung auf einfache Art und Weise zumindest teilautomatisch erzeugt und kontrolliert werden.

Eine weitere vorteilhafte Ausgestaltung der erfindungsgemäßen Klebeverbindung sieht vor, dass das Messsignal eine elektrische Spannung und/oder ein elektrischer Strom ist. Hierdurch ist eine einfache und zumindest teilautomatische Auswertbarkeit des Messsignals in der Steuer- und Regeleinrichtung gegeben.

Gemäß einer weiteren vorteilhaften Ausgestaltung der erfindungsgemäßen Klebeverbindung ist das Steuersignal in einer Steuer- und Regeleinrichtung erzeugbar und/oder das Messsignal ist der Steuer- und Regeleinrichtung zuführbar.

Mittels der Steuer- und Regeleinrichtung kann die mechanische Mindestbelastbarkeit und/oder die Erfassung eines mechanischen Belastungszustandes in der Klebeverbindung zumindest teilautomatisch erfolgen.

Nach Maßgabe einer weiteren vorteilhaften Ausgestaltung ist das Klebemittel mit einem Flächengebilde, insbesondere einem Klebestreifen, gebildet.
Hierdurch ist eine einfache und schnelle Applikation des Klebemittels auf den zu verbindenden Bauteilen gewährleistet. Gegebenenfalls weist das als Klebestreifen ausgebildete Klebemittel einseitig und/oder beidseitig einen Schutzfilm auf. Darüber hinaus kann das Klebemittel in der Form eines Klebestreifens leicht in einer Rollenform gelagert werden.

Gemäß einer weiteren vorteilhaften Ausgestaltung der erfindungsgemäßen Klebeverbindung ist das Klebemittel mit einem Flüssigkunststoff, insbesondere mit einem pastösen Flüssigkunststoff, gebildet.
Diese Ausgestaltung, insbesondere mit einem pastösen Flüssigkunststoff, ermöglicht die Applikation des Klebemittels auch an schwer zugänglichen Stellen oder im Bereich von Klebeverbindungen, die zumindest bereichsweise eine nicht ebene Oberflächentopografie aufweisen.

Eine weitere Ausführungsform der erfindungsgemäßen Klebeverbindung sieht vor, dass die Funktionselemente insbesondere plattenförmig und/oder strangförmig ausgebildet sind. Infolge der plattenförmigen und/oder strangförmigen Gestalt der Funktionselemente ist deren weitgehend störungsfreie Einbettung in die Matrix des Klebemittels bei einer Vielzahl von geometrischen Gestaltungen gewährleistet, so dass dessen mechanische Belastbarkeit nicht wesentlich beeinträchtigt wird. Darüber hinaus lassen sich plattenförmige und/oder strangförmige Funktionselemente leicht herstellen.

Nach Maßgabe einer weiteren vorteilhaften Ausgestaltung der Erfindung sind die Funktionselemente mit piezoelektrischen Keramiken und/oder mit piezoelektrischen Polymeren gebildet.
Diese Ausgestaltung ermöglicht sowohl einen sensorischen als auch einen aktuatorischen Betrieb der Funktionselemente. In einer besonders bevorzugten Ausführungsform werden die Funktionselemente mit so genannten piezoelektrischen Stacks gebildet, die schon bei relativ kleinen elektrischen Anregungen große Verformungswege erbringen und somit hohe mechanische Spannungen in der Klebeverbindung bei einem guten elektrischen Wirkungsgrad erzeugen. Die piezoelektrischen Stacks bestehen im Prinzip aus mehreren, übereinander geschichteten piezoelektrischen Keramikplättchen oder entsprechend angeordneten piezoelektrischen Elementen aus Polymeren. Die Funktionselemente können abweichend von der Plättchen- bzw. der Stackform auch strangförmig ausgebildet sein und insbesondere die Form von Filamenten bzw. Fasern aufweisen, die in die Harzmatrix der Klebeverbindung integriert werden.

Gemäß einer weiteren vorteilhaften Ausgestaltung der Erfindung sind die Funktionselemente zumindest teilweise mit Formgedächtnislegierungen gebildet.
Die Verwendung von Formgedächtnislegierungen erlaubt die Herstellung von Funktionselementen, die schon bei relativ geringfügigen elektrischen Anregungen hohe mechanische Kräfte entwickeln bzw. Verformungswege aufweisen. Ein sensorischer Betrieb von Funktionselementen, die mit Formgedächtnislegierungen gebildet sind, ist dagegen in der Regel nicht möglich.

Nach Maßgabe einer weiteren vorteilhaften Ausgestaltung der Klebeverbindung ist mittels der Funktionselemente eine Materialstärke des Klebemittels einstellbar.
Hierdurch ist ein definierter Abstand der mittels der Klebeverbindung zusammengefügten Bauteile gewährleistet. Es ist daher nicht mehr erforderlich, weitere Zuschlagstoffe in das Klebemittel zur Einstellung einer definierten Distanz einzubringen.

Weiterhin wird die Aufgabe durch ein Verfahren nach Maßgabe des Patentanspruchs 13 gelöst.

Das erfindungsgemäße Verfahren umfasst hierbei die folgenden Schritte:
- Einkoppeln eines Steuersignals in die Funktionselemente und
- Erhöhen des Steuersignals bis zu einem Grenzwert.

Durch das erfindungsgemäße Verfahren ist eine schnelle, einfache und unmittelbare Überprüfbarkeit der mechanischen Belastbarkeit und/oder der mechanischen Festigkeit der Klebeverbindung möglich. Der Grenzwert des Steuersignals entspricht hierbei bevorzugt einer mechanischen Spannung in der Klebeverbindung, die eine mechanische Mindestbelastbarkeit der Klebeverbindung gewährleistet. Erforderlichenfalls kann der Grenzwert des Steuersignals zur Durchführung von Festigkeitsprüfungen auch einer mechanischen Spannung im Bereich der mechanischen Festigkeit der Klebeverbindung entsprechen.

Eine vorteilhafte Ausgestaltung des erfindungsgemäßen Verfahrens sieht vor, dass das Steuersignal solange erhöht wird, bis ein Grenzwert erreicht ist, bei dem eine mechanische Spannung in der Klebeverbindung herrscht, die eine mechanische Mindestbelastbarkeit der Klebeverbindung gewährleistet.
Hierdurch kann die Mindestbelastbarkeit der Klebeverbindung auf einfache Art und Weise ermittelt werden.

Eine weitere vorteilhafte Ausgestaltung des erfindungsgemäßen Verfahrens sieht vor, dass das Steuersignal solange erhöht wird, bis ein Grenzwert erreicht ist, bei dem eine mechanische Spannung in der Klebeverbindung herrscht, die eine mechanische Festigkeit der Klebeverbindung übersteigt.

Hierdurch lassen sich erforderlichenfalls auch Festigkeitswerte der Klebeverbindung auf einfache Art und Weise ermitteln. Das Steuersignal wird hierbei solange erhöht, bis die Klebeverbindung mechanisch versagt.

Eine weitere vorteilhafte Ausgestaltung des erfindungsgemäßen Verfahrens sieht vor, dass ein Messsignal aus den Funktionselementen ausgekoppelt wird, um die in der Klebeverbindung herrschende mechanische Spannung zu ermitteln.
Hierdurch ist eine direkte Messung der innerhalb der Klebeverbindung herrschenden mechanischen Spannungen mittels der in diesem Fall zumindest teilweise sensorisch betriebenen Funktionselemente möglich. Diese Messung ist genauer als eine indirekte Ermittlung der innerhalb der Klebeverbindung herrschenden mechanischen Spannung über eine Messung der Höhe der an die Klebeverbindung angelegten äußeren Steuerspannung.

Weitere vorteilhafte Ausgestaltungen der erfindungsgemäßen Klebevorrichtung und des erfindungsgemäßen Verfahrens zur Überprüfung einer Klebeverbindung sind in weiteren Patentansprüchen dargelegt.

In der Zeichnung zeigt:
- **Fig. 1**: einen Schnitt durch zwei mittels der erfindungsgemäßen Klebeverbindung verbundene Bauteile nach Maßgabe eines ersten Ausführungsbeispiels,
- **Fig. 2**: einen Schnitt durch zwei mittels der erfindungsgemäßen Klebeverbindung verbundene Bauteile nach Maßgabe eines zweiten Ausführungsbeispiels,
- **Fig. 3**: einen Schnitt durch die Klebeverbindung nach Maßgabe der zweiten Ausführungsvariante entlang der Schnittlinie A-A in der Fig. 2 und
- **Fig. 4**: Diagramm zum schematischen Ablauf des erfindungsgemäßen Verfahrens.

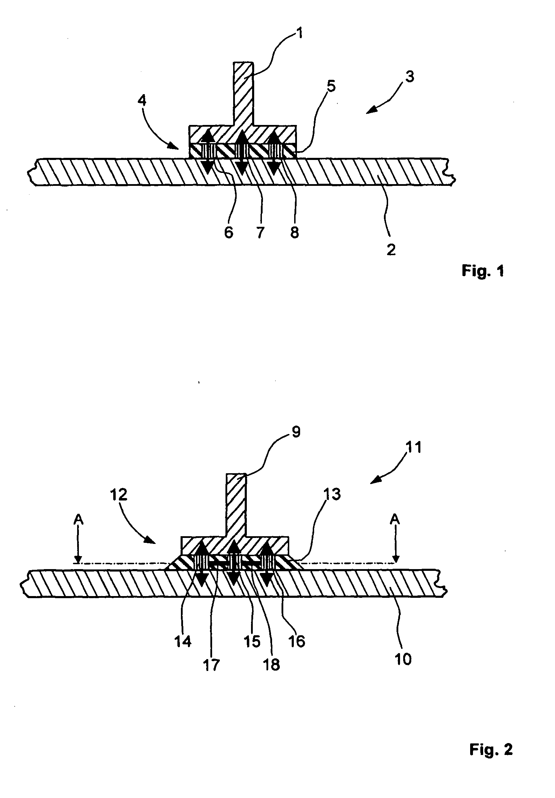

Die **Fig.1** zeigt einen Schnitt durch zwei mittels der erfindungsgemäßen Klebeverbindung verbundene Bauteile gemäß eines ersten Ausführungsbeispiels.

Ein erstes Bauteil 1 ist mit einem zweiten Bauteil 2 durch die erfindungsgemäße Klebeverbindung 3 verbunden. Die Bauteile 1,2 können jeweils aus Metall und/oder aus einem faserverstärkten Kunststoffmaterial, insbesondere mit einem kohlefaserverstärkten Epoxidharz, gebildet sein.

Die Klebeverbindung 3 ist im Wesentlichen mit einem Klebemittel 4 gebildet, das zwischen dem ersten und dem zweiten Bauteil 1,2 angeordnet ist. Das Klebemittel 4 ist im gezeigten Ausführungsbeispiel mit einem Klebefilm 5 gebildet. Der Klebefilm 5 besteht beispielsweise aus einem durch geeignete Druck- und Temperatureinwirkung aushärtbaren Epoxydharz. Zur Verbindung des ersten Bauteils 1 mit dem zweiten Bauteil 2 wird der Klebefilm 5, gegebenenfalls nach dem Abziehen von Schutz- und/oder Deckfolien, im Bereich einer gewünschten Verbindungsfläche zwischen dem ersten Bauteil 1 und dem zweiten Bauteil 2 platziert. Anschließend werden die Bauteile 1,2 durch eine geeignete Einwirkung von Druck, Temperatur und Zeit fest miteinander verklebt. Der Klebefilm 5 überträgt nach der Fertigstellung der Klebeverbindung sämtliche, zwischen dem ersten Bauteil 1 und dem zweiten Bauteil 2 auftretenden Kräfte.

Erfindungsgemäß sind im gezeigten Ausführungsbeispiel innerhalb des Klebefilms 5 drei Funktionselemente 6,7,8 eingelagert, die mit piezoelektrischen Keramikplättchen gebildet sind. In einer besonders bevorzugten Ausführungsform kommen so genannte "piezokeramische Stacks" als Funktionselemente 6,7,8 zum Einsatz, die bei minimalem elektrischen Energieeintrag eine hohe mechanische Deformationsenergie aufweisen. Die Einlagerung bzw. Integration der Funktionselemente 6,7,8 erfolgt beispielsweise bei der Herstellung des Klebefilms 5. Abweichend von der gezeigten plättchenförmigen Ausgestaltung der Funktionselemente 6,7,8 können diese auch strangförmig, beispielsweise als Filament, ausgebildet sein. Weitere geometrische Ausgestaltungen sind darüber hinaus möglich. Die Funktionselemente 6,7,8 sind vorzugsweise in etwa matrixartig innerhalb des Klebefilms 5 positioniert. Senkrecht zur Zeichenebene der Fig. 1 befinden sich demzufolge weitere, hier nicht dargestellte Funktionselemente, die parallel zu den Funktionselementen 6,7,8 angeordnet sind. Innerhalb des Klebefilms 5 kann eine beliebige Anzahl von Funktionselementen 6,7,8 integriert sein. Durch eine Erhöhung der Anzahl der innerhalb des Klebefilms 5 eingelagerten Funktionselemente 6,7,8 lässt sich insbesondere die Genauigkeit einer hiermit durchgeführten Belastungsmessung steigern.

Mittels der beispielsweise mit einem piezoelektrischen Keramikmaterial gebildeten Funktionselemente 6,7,8 lassen sich definierte mechanische Spannungen innerhalb der Klebeverbindung 3 für mechanische Festigkeitsprüfungen an der Klebeverbindung 3 erzeugen (Aktuatorbetrieb). Die Erzeugung einer mechanischen Spannung erfolgt hierbei in der Weise, dass beispielsweise eine elektrische Steuerspannung an die Funktionselemente 6,7,8 über in der Darstellung der Fig. 1 nicht näher dargestellte Kontaktelemente angelegt wird. Hierdurch deformieren sich die Funktionselemente 6,7,8 aufgrund des piezoelektrischen Effektes entsprechend zur Höhe der angelegten elektrischen Steuerspannung und erzeugen hierdurch eine definierte mechanische Spannung innerhalb der Klebeverbindung 3, die erfindungsgemäß zur Überprüfung der mechanischen Belastbarkeit der Klebeverbindung 3 herangezogen wird. In einer alternativen Ausführungsform können die Funktionselemente 6,7,8 zumindest teilweise mit piezoelektrischen Polymeren oder dergleichen gebildet sein.

Die Hauptdeformationsrichtung der Funktionselemente 6,7,8 verläuft beispielsweise in Richtung der im Bereich des Klebefilms 5 eingezeichneten drei schwarzen Doppelpfeile, sodass die Klebeverbindung 3 infolge einer Ausdehnung der Funktionselemente 6,7,8 im Wesentlichen mit mechanischen Spannungen in dieser Raumrichtung belastet ist. Die Hauptdeformationsrichtung kann hiervon abweichend durch Funktionselemente 6,7,8 mit einem anderen inneren Kristallaufbau bzw. durch eine andere elektrische Ansteuerung, beispielsweise auch parallel zu den Oberflächen der Bauteile 1,2 erzeugt werden, um eine mechanische Belastung der Klebeverbindung 3 durch Schubkräfte nachzuahmen. Abweichend hiervon können beispielsweise auch Druckkräfte durch eine einfache Umkehrung der Steuerspannung mittels der Funktionselemente 6,7,8 innerhalb der Klebeverbindung erzeugt werden.

Zum Heranführen der elektrischen Steuerspannung an die Kontaktelemente weisen die Funktionselemente 6,7,8 darüber hinaus nicht näher dargestellte Anschlusselemente auf. Sowohl die Kontaktelemente als auch die Anschlusselemente können beispielsweise mit metallisierten Kunststofffolien gebildet werden. Die metallisierten Kunststofffolien werden in den Klebefilm 5 integriert und tragen gleichzeitig die Funktionselemente 6,7,8.

Alternativ kann die Steuerspannung auch berührungslos in die Funktionselemente 6,7,8 eingekoppelt werden. In diesem Fall können die Kontaktelemente beispielsweise als Antennen zur Aufnahme elektromagnetischer Wechselfelder ausgebildet sein. Die Anschlusselemente können dann zumindest teilweise entfallen.

Zur Überprüfung der mechanischen Belastbarkeit der Klebeverbindung 3 muss zunächst empirisch ein Grenzwert für eine Steuerspannung ermittelt werden, der einer geforderten Mindestbelastbarkeit der Klebeverbindung 3, einschließlich eines Sicherheitszuschlages, entspricht. Wird die Steuerspannung in der Höhe dieses Grenzwertes an die Funktionselemente 6,7,8 angelegt und die Klebeverbindung 3 hält den hierdurch erzeugten, inneren mechanischen Spannungen stand, so ist davon auszugehen, dass die Klebeverbindung 3 auch sämtlichen, im praktischen Betrieb auftretenden mechanischen Lastfällen standhält.

Damit ist durch die Klebeverbindung 3 selbst eine schnelle, einfache und zerstörungsfreie Überprüfung der mechanischen Belastbarkeit der über die Klebeverbindung 3 verbundenen Bauteile 1,2 möglich. Die Erzeugung und Regelung der Steuerspannung sowie die Auswertung etwaiger mit den Funktionselementen 6,7,8 erzeugten elektrischen Messspannungen zur Erfassung der innerhalb der Klebeverbindung 3 bestehenden mechanischen Spannungen erfolgt hierbei in einer nicht dargestellten Steuer- und Regeleinrichtung, die beispielsweise geeignete elektrische Messverstärker, Rechnereinheiten sowie entsprechende elektrische Leistungsverstärker bzw. Ausgangsverstärker aufweist.

Umgekehrt lässt sich auch eine innerhalb der erfindungsgemäßen Klebeverbindung 3 bestehende mechanische Spannung durch die Funktionselemente 6,7,8 nachweisen (Sensorbetrieb). Denn jede Deformation der Funktionselemente 6,7,8 führt aufgrund des piezoelektrischen Effektes auch zu einer Messspannung an den Funktionselementen 6,7,8, die dem mechanischen Belastungszustand bzw. der mechanischen Spannung, die im Inneren der Klebeverbindung 3 besteht, entspricht. Diese Deformation der Funktionselemente 6,7,8 kann entweder direkt durch von Außen wirkende Kräfte oder aber indirekt durch im Aktuatorbetrieb betriebene Funktionselemente 6,7,8 erzeugt werden. Über die Kontaktelemente kann die Messspannung dann auf die externe Steuer- und Regeleinrichtung übertragen werden. Aus der Höhe der Messspannung lässt sich dann in der Steuer- und Regeleinrichtung durch geeignete Auswertealgorithmen die tatsächlich innerhalb der Klebeverbindung 3 herrschende mechanische Spannung ermitteln. Jedes Funktionselement 6,7,8 kann hierbei sowohl als Aktuator zur Erzeugung einer mechanischen Spannung durch das Anlegen einer elektrischen Steuerspannung (Aktuatorbetrieb) oder auch als Sensor zur Umwandlung einer mechanischen Spannung in eine hierzu proportionale elektrische Messspannung fungieren (Sensorbetrieb). Die Funktionselemente 6,7,8 können hierbei entweder spezialisiert im Aktuatorbetrieb bzw. Sensorbetrieb arbeiten oder aber es erfolgt eine zeitliche Abfolge zwischen dem Aktuatorbetrieb und dem Sensorbetrieb (Multiplexbetrieb).

Erfolgt parallel zur Änderung der an die Funktionselemente 6,7,8 angelegten Steuerspannung auch eine Messung der innerhalb der Klebeverbindung 3 herrschenden mechanischen Spannungen durch die als Sensor betriebenen Funktionselemente 6,7,8, so ist es nicht erforderlich, einen Grenzwert für die anzulegende elektrische Steuerspannung empirisch zu ermitteln, weil eine direkte Messung der in der Klebeverbindung 3 herrschenden mechanischen Spannungen bzw. der Belastungszustände erfolgt.

Bei zumindest teilweise metallische Komponenten aufweisenden Bauteilen 1,2 können sowohl die Steuer- als auch die Messspannung direkt über die dann bereichsweise elektrisch leitfähigen Bauteile 1,2 zu- bzw. abgeführt werden. In diesem Zusammenhang ist beispielsweise an Sandwichplatten mit zumindest bereichsweise metallischen Deckschichten und/oder zumindest bereichsweise metallisierten Deckschichten zu denken. Bei Bauteilen 1,2 aus kohlefaserverstärkten Epoxydharzen können beispielsweise auch bereits vorhandene metallische Einlagen, zum Beispiel Blitzableiter, Metallgeflechte zur Ableitung elektrischer Ladungen oder dergleichen, zur Signalführung mit genutzt werden. Eine weitere Möglichkeit besteht in einer zumindest bereichsweisen Dotierung des Klebefilms 5, beispielsweise mit leitfähigen Partikeln. Durch das Anlegen eines äußeren magnetischen Wechselfeldes kann dann in dem Klebefilm 5 im Bereich der Dotierung ein elektrisches Feld erzeugt werden, das zu den gewünschten definierten Verformungen der Funktionselemente 6,7,8 und damit zu den beabsichtigten mechanischen Spannungen in der Klebeverbindung 3 führt.

Sind die Funktionselemente 6,7,8 zumindest teilweise als metallische Formgedächtnislegierungen ausgebildet, um beispielsweise einen höheren Wirkungsgrad im Aktuatorbetrieb und damit höhere mechanische Spannungen in der Klebeverbindung 3 zu erreichen, ist ein Sensorbetrieb in der Regel nicht möglich. Zur Steuerung der Formgedächtnislegierungen muss in der Regel deren Temperatur variiert werden, was beispielsweise durch das Einkoppeln eines elektrischen Stromes, der zu einer entsprechenden Temperaturerhöhung führt, erfolgen kann. Eine gesteuerte Temperaturänderung kann auch berührungslos, beispielsweise durch induktiv innerhalb der Formgedächtnislegierung erzeugte Wirbelströme oder dergleichen, erfolgen.

Die Funktionselemente 6,7,8 dienen darüber hinaus auch zur Sicherstellung eines Mindestabstandes zwischen dem ersten und dem zweiten Bauteil 1,2, um eine exakt definierte Höhe der sich ergebenden Klebeverbindung 3 zwischen den Bauteilen 1,2 zu erreichen. Die Verwendung von zusätzlichen Zuschlag- und Füllstoffen ist somit zumindest teilweise entbehrlich.

Die **Fig. 2** zeigt eine Schnittdarstellung durch zwei mittels der erfindungsgemäßen Klebeverbindung verbundene Bauteile nach Maßgabe eines zweiten Ausführungsbeispiels.

Ein erstes Bauteil 9 ist mit einem zweiten Bauteil 10 durch eine Klebeverbindung 11 verbunden. Im Unterschied zu dem Ausführungsbeispiel nach Maßgabe der Fig. 1 ist das Klebemittel 12 hier nicht ein Klebefilm sondern ein pastöser Klebstoff 13. Bei dem Klebstoff 13 kann es sich beispielsweise um ein aushärtbares Epoxydharz mit oder ohne eine Faserverstärkung handeln. Innerhalb des Klebstoffes 13 sind die, beispielsweise mit piezoelektrischen Keramiken, insbesondere mit piezo-keramischen Stacks, gebildeten Funktionselemente 14,15,16 angeordnet. Die räumliche Anordnung der Funktionselemente 14,15,16 entspricht im Wesentlichen der Anordnung der Funktionselemente 6,7,8 in der Fig. 1. Die drei schwarzen Doppelpfeile im Bereich des Klebstoffes 13 symbolisieren wiederum die Hauptdeformationsrichtung der Funktionselemente 14,15,16 bei angelegter Steuerspannung. Im Unterschied zu der Ausführungsform nach Maßgabe der Fig. 1 sind die Funktionselemente 14,15,16 hier durch schmale Stege 17,18 jeweils miteinander verbunden, sodass beim Auftrag des pastösen Klebstoffes 13 beim Fügeprozess die Festigkeit der matrixartigen Anordnung der Funktionselemente 14,15,16 nicht wesentlich beeinträchtigt wird. Hinsichtlich der weiteren technischen Details der Funktionselemente 14,15,16 sei auf die im Rahmen der Beschreibung der Fig. 1 gemachten Ausführungen verwiesen.

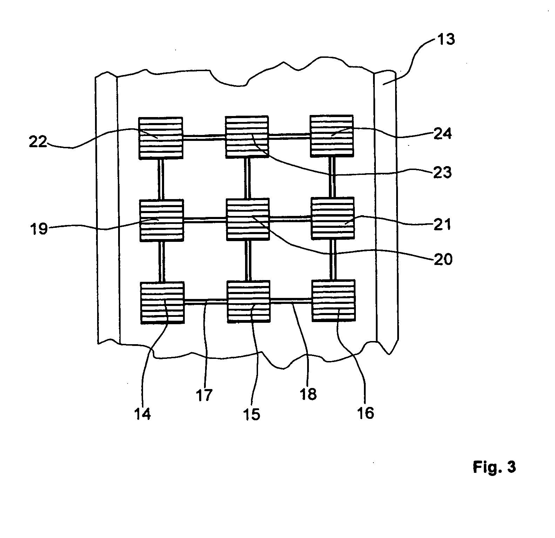

Die **Fig. 3** zeigt einen Schnitt durch die Klebeverbindung nach Maßgabe der zweiten Ausführungsvariante entlang einer Schnittlinie A-A in der Fig. 2. In einer unteren Reihe der matrixartigen Anordnung sind die Funktionselemente 14,15,16 vorzugsweise gleichmäßig zueinander beabstandet angeordnet. Hierbei sind die Funktionselemente 14,15,16 durch die Stege 17,18 untereinander verbunden. Der gezeigte Ausschnitt der matrixartigen Struktur setzt sich nach oben in den weiteren Funktionselementen 19-24 fort, die durch in der Darstellung der Fig. 3 nicht näher bezeichnete, entsprechend zu den Stegen 17,18 ausgebildete Stege untereinander verbunden sind. Entsprechend setzt sich die matrixartige Anordnung der Funktionselemente auch nach unten weiter fort. Abweichend von der gezeigten geometrischen Anordnung können die Funktionselemente 14,15,16 sowie 19-24 in jeder denkbaren Art und Weise sowie Anzahl zueinander positioniert werden. Die Stege 17,18 können beispielsweise Bestandteil einer netzartigen Struktur sein, in deren Knotenpunkten dann die Funktionselemente angeordnet werden. Die Stege 17,18 sichern primär die Ausrichtung der Funktionselemente 14-16 während der Aufbringung des in diesem Fall bevorzugt pastösen Klebstoffes 13 zur Bildung des Klebemittels 12. Die weiteren Stege sichern entsprechend die Ausrichtung der Funktionselemente 19-24. Darüber hinaus können die Stege zumindest bereichsweise elektrisch leitend ausgebildet sein, um die Steuerspannung und/oder die Messspannung an die Funktionselemente 14-16,19-24 anzukoppeln. Im Fall einer berührungslosen Kopplung der Steuerspannung und/oder der Messspannung an die Steuer- und Regeleinrichtung können die Stege auch als Antennen zur Aufnahme bzw. zur Abstrahlung elektromagnetischer Wellen ausgebildet sein.

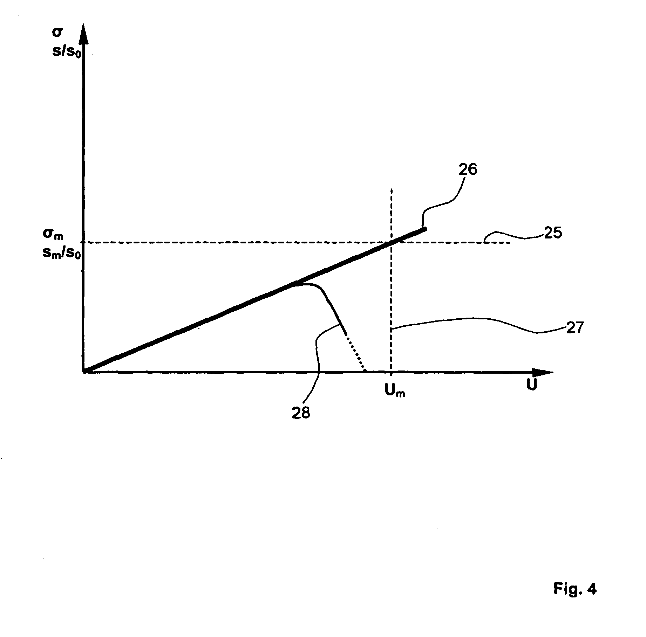

Die **Fig. 4** illustriert schematisch den Ablauf des erfindungsgemäßen Verfahrens am Beispiel der Klebeverbindung 3 nach Maßgabe der Fig. 1. Das Verfahren ist entsprechend auf die Klebeverbindung 11 nach Maßgabe der Fig. 2 anwendbar.

Auf der Ordinate des in der Fig. 4 dargestellten Diagramms sind die in der Klebeverbindung 3 herrschenden mechanischen Spannungen σ bzw. die relative Dehnung s/s₀ der Klebeverbindung 3 abgetragen. Auf der Abszisse ist die Höhe der angelegten Steuerspannung U dargestellt. Die horizontale punktierte Hilfslinie 25 entspricht dabei einer mechanischen Mindestspannung σₘ bzw. einer Mindestdehnung sₘ/sₒ, die von der Klebeverbindung 3 noch sicher ertragen werden muss, um unter allen denkbaren realen Lastzuständen der Klebeverbindung 3 deren mechanisches Versagen im Betrieb mit einer hinreichend hohen Wahrscheinlichkeit auszuschließen. Die mit hoher Strichstärke ausgezogene Gerade 26 repräsentiert hierbei eine an den Funktionselementen 6,7,8 während des Verfahrensablaufs jeweils anliegende elektrische Steuerspannung U. Der Verlauf der Steuerspannung U kann einen beliebigen von der Gerade 26 abweichenden, beispielsweise auch nichtlinearen zeitlichen Verlauf, aufweisen. Anstatt der Steuerspannung kann auch ein Steuerstrom in die Funktionselemente 6,7,8 eingeprägt werden.

Während des Ablaufs des erfindungsgemäßen Verfahrens wird die an die Funktionselemente 6,7,8 angelegte elektrische Steuerspannung U in Schritten oder kontinuierlich von der Steuer- und Regeleinrichtung solange erhöht, bis die mechanische Spannung σ eine Mindestspannung σₘ innerhalb des Klebemittels 4 erreicht, die der horizontalen, punktierten Hilfslinie 25 entspricht. Dies ist im Allgemeinen dann der Fall, wenn die Steuerspannung U eine elektrische Mindestspannung Um, dargestellt durch die vertikale, punktierte Hilfslinie 27, erreicht. Der Betrag der an die Funktionselemente 6,7,8 jeweils anzulegenden Mindestspannung Um, der die Klebeverbindung 3 noch standhalten muss, um eine ausreichende mechanische Mindestbelastbarkeit zu gewährleisten, wird empirisch ermittelt.

Dies kann beispielsweise durch einen konventionellen Zugversuch mit der Klebeverbindung 3 erfolgen, bei dem eine bekannte Zugkraft auf die Klebeverbindung 3 einwirkt, die zu einer messbaren Testdehnung S_{Test}/S₀ der Klebeverbindung 3 führt. Die Messung der Testdehnung S_{Test}/S₀ der Klebeverbindung 3 kann beispielsweise berührungslos durch Laser-Interferometrie erfolgen. Anschließend wird eine elektrische Testspannung U_{Test} an die Klebeverbindung 3 angelegt, bei der sich in etwa die gleiche relative Testdehnung S_{Test}/S₀ wie bei dem vorhergegangenen Zugversuch einstellt. Der Betrag dieser elektrischen Testspannung U_{Test} wird gemessen und stellt dann für die folgenden Festigkeitsmessungen mittels des erfindungsgemäßen Verfahrens die anzulegende Mindestspannung Um der elektrischen Steuerspannung U dar, der eine zu prüfende Klebeverbindung sicher standhalten muss.

Alternativ hierzu ist es auch möglich, die in der Klebeverbindung 3 herrschenden mechanischen Spannungen σ unmittelbar durch die Funktionselemente 6,7,8 zu erfassen, wobei die Funktionselemente 6,7,8 dann zumindest teilweise im Sensorbetrieb arbeiten. In diesem Fall steigert die Steuer- und Regeleinrichtung zunächst die an die beispielsweise aktuatorisch betriebenen Funktionselemente 6,8 angelegte Steuerspannung U solange, bis die Auswertung der Messspannung des dann sensorisch arbeitenden Funktionselementes 7 eine Höhe der elektrischen Spannung ergibt, die der mechanischen Mindestspannung σₘ bzw. einer Mindestdehnung Sₘ/S₀ entspricht, der die Klebeverbindung 3 noch sicher standhalten muss. In diesem Moment stoppt die Steuer- und Regeleinrichtung den Spannungsanstieg der Steuerspannung U an den aktuatorisch betriebenen Funktionselementen 6,8, sodass die mechanische Spannung in der Klebeverbindung 3 nicht weiter steigt und eine Beschädigung bzw. Zerstörung der Klebeverbindung 3 unterbleibt.

Hält die Klebeverbindung 3 dieser Höhe der angelegten Steuerspannung U, die aufgrund der Messspannung auf eine innere mechanische Mindestspannung von σₘ bzw. eine Mindestdehnung von Sₘ/S₀ schließen lässt, ohne sichtbare mechanische Beeinträchtigung stand, so erfüllt die mittels des erfindungsgemäßen Verfahrens geprüfte Klebeverbindung 3 die strukturmechanisch geforderte Mindestbelastbarkeit. Damit ist davon auszugehen, dass die geprüfte Klebeverbindung 3 auch allen auftretenden realen mechanischen Belastungszuständen im Dauerbetrieb sicher standhält. Die mittels der erfindungsgemäß geprüften Klebeverbindung 3 verbundenen Bauteile 1,2 können bedenkenlos in der Produktion eingesetzt werden.

Versagt die Klebeverbindung 3 jedoch bereits vor dem Erreichen der Mindestspannung σₘ bzw. vor dem Erreichen der elektrischen Mindestspannung Um, beispielsweise durch eine Überdehnung, einen Bruch, eine bereichsweise Ablösung oder dergleichen, was im Diagramm der Fig. 4 durch einen abknickenden und im Endbereich gepunkteten Kurvenverlauf 28 dargestellt ist, muss die Klebeverbindung 3 bzw. müssen die hierüber verbundenen Bauteile 1,2 ausgesondert und können nach der Prüfung nicht weiter in der Produktion eingesetzt werden.

Mittels des erfindungsgemäßen Verfahrens lassen sich somit Klebeverbindungen einfach, schnell und unmittelbar, ohne das Erfordernis der Durchführung von aufwändigen Zugversuchen mit komplexen Mess- und Prüfeinrichtungen, auf ihre mechanische Belastbarkeit und/oder ihre mechanische Festigkeit hin überprüfen. Weiterhin lassen sich mittels des erfindungsgemäßen Verfahrens auch Belastungsuntersuchungen an Klebeverbindungen an schwer zugänglichen Stellen durchführen. Ferner lassen sich die Belastungsuntersuchungen an den Klebeverbindungen auch berührungslos durchführen.

### Bezugszeichenliste

- 1: erstes Bauteil
- 2: zweites Bauteil
- 3: Klebeverbindung
- 4: Klebemittel
- 5: Klebefilm
- 6: Funktionselement
- 7: Funktionselement
- 8: Funktionselement
- 9: erstes Bauteil
- 10: zweites Bauteil
- 11: Klebeverbindung
- 12: Klebemittel
- 13: Klebstoff
- 14: Funktionselement
- 15: Funktionselement
- 16: Funktionselement
- 17: Steg
- 18: Steg
- 19: Funktionselement
- 20: Funktionselement
- 21: Funktionselement
- 22: Funktionselement
- 23: Funktionselement
- 24: Funktionselement
- 25: Hilfslinie
- 26: Gerade
- 27: Hilfslinie
- 28: Kurvenverlauf

## Patentansprüche

1. Klebeverbindung zum Verbinden von Bauteilen von Verkehrsmitteln, wobei die Klebeverbindung mit einem Klebemittel gebildet ist,
**dadurch gekennzeichnet, dass** das Klebemittel umfasst:
- eine erste Vielzahl an Funktionselementen, die eingerichtet sind, um ein Steuersignal in eine mechanische Spannung innerhalb der Klebeverbindung umzuwandeln, und
- eine zweite Vielzahl an Funktionselementen, die eingerichtet sind, um eine mechanische Spannung in der Klebeverbindung in ein Messsignal zur Erfassung eines mechanischen Belastungszustandes in der Klebeverbindung umzuwandeln.

2. Klebeverbindung nach Anspruch 1,
**dadurch gekennzeichnet, dass** im Bereich der Funktionselemente zur Zuleitung und/oder Ableitung des Steuersignals und/oder des Messsignals Kontaktelemente angeordnet sind.

3. Klebeverbindung nach Anspruch 1 oder 2,
**dadurch gekennzeichnet, dass** das Steuersignal und/oder das Messsignal berührungslos übertragbar ist.

4. Klebeverbindung nach einem der Ansprüche 1 bis 3,
**dadurch gekennzeichnet, dass** das Steuersignal eine elektrische Spannung und/oder ein elektrischer Strom ist.

5. Klebeverbindung nach einem der Ansprüche 1 bis 4,
**dadurch gekennzeichnet, dass** das Messsignal eine elektrische Spannung und/oder ein elektrischer Strom ist.

6. Klebeverbindung nach einem der Ansprüche 1 bis 5,
**dadurch gekennzeichnet, dass** das Steuersignal in einer Steuer- und Regeleinrichtung erzeugbar ist und/oder das Messsignal der Steuer- und Regeleinrichtung zuführbar ist.

7. Klebeverbindung nach einem der Ansprüche 1 bis 6,
**dadurch gekennzeichnet, dass** das Klebemittel mit einem Flächengebilde gebildet ist.

8. Klebeverbindung nach einem der Ansprüche 1 bis 7,
**dadurch gekennzeichnet, dass** das Klebemittel mit einem Flüssigkunststoff gebildet ist.

9. Klebeverbindung nach einem der Ansprüche 1 bis 8,
**dadurch gekennzeichnet, dass** die Funktionselemente plattenförmig und/oder strangförmig ausgebildet sind.

10. Klebeverbindung nach einem der Ansprüche 1 bis 9,
**dadurch gekennzeichnet, dass** die Funktionselemente mit piezoelektrischen Keramiken und/oder mit piezoelektrischen Polymeren gebildet sind.

11. Klebeverbindung nach einem der Ansprüche 1 bis 10,
**dadurch gekennzeichnet, dass** die Funktionselemente zumindest teilweise mit Formgedächtnislegierungen gebildet sind.

12. Klebeverbindung nach einem der Ansprüche 1 bis 11,
**dadurch gekennzeichnet, dass** mittels der Funktionselemente eine Materialstärke des Klebemittels einstellbar ist.

13. Verfahren zur Erfassung eines in einer Klebeverbindung herrschenden mechanischen Belastungszustandes, wobei in der mit einem Klebemittel gebildeten Klebeverbindung eine erste Vielzahl an Funktionselementen und eine zweite Vielzahl an Funktionselementen integriert sind, mit den Schritten:
- Einkoppeln eines Steuersignals in die einzelnen Funktionslemente der ersten Vielzahl an Funktionselementen;
- Umwandeln des Steuersignals innerhalb der Klebeverbindung in eine mechanische Spannung mit den einzelnen Funktionslementen der ersten Vielzahl an Funktionselementen;
- Umwandeln der mechanischen Spannung in der Klebeverbindung in ein Messsignal mit den einzelnen Funktionslementen der zweiten Vielzahl an Funktionselementen; und
- Auskoppeln des Messsignals aus den einzelnen Funktionslementen der zweiten Vielzahl an Funktionselementen, um die in der Klebeverbindung herrschende mechanische Spannung zu ermitteln.

14. Verfahren nach Anspruch 13,
**dadurch gekennzeichnet, dass** das Steuersignal solange erhöht wird, bis ein Grenzwert erreicht ist, bei dem eine mechanische Spannung in der Klebeverbindung herrscht, die eine mechanische Mindestbelastbarkeit der Klebeverbindung gewährleistet.

15. Verfahren nach Anspruch 13 oder 14,
**dadurch gekennzeichnet, dass** das Steuersignal solange erhöht wird, bis ein Grenzwert erreicht ist, bei dem eine mechanische Spannung in der Klebeverbindung herrscht, die eine mechanische Festigkeit der Klebeverbindung übersteigt.

16. Verfahren nach einem der Ansprüche 13 bis 15,
**dadurch gekennzeichnet, dass** das Steuersignal solange erhöht wird, bis das Messsignal einer mechanischen Spannung entspricht, die die mechanische Mindestbelastbarkeit der Klebeverbindung gewährleistet.

17. Verfahren nach einem der Ansprüche 13 bis 16,
**dadurch gekennzeichnet, dass** das Steuersignal und/oder das Messsignal über im Bereich der Funktionselemente angeordnete Kontaktelemente übertragen wird.

18. Verfahren nach einem der Ansprüche 13 bis 17,
**dadurch gekennzeichnet, dass** das Steuersignal und/oder das Messsignal berührungslos übertragen wird.

19. Verfahren nach einem der Ansprüche 13 bis 18,
**dadurch gekennzeichnet, dass** als Steuersignal eine elektrische Spannung und/oder ein elektrischer Strom verwendet wird.

20. Verfahren nach einem der Ansprüche 13 bis 19,
**dadurch gekennzeichnet, dass** als Messsignal eine elektrische Spannung und/oder ein elektrischer Strom verwendet wird.

21. Verfahren nach einem der Ansprüche 13 bis 20,
**dadurch gekennzeichnet, dass** das Steuersignal in einer Steuer- und Regeleinrichtung erzeugt wird und/oder das Messsignal der Steuer- und Regeleinrichtung zugeführt wird.

22. Verfahren nach einem der Ansprüche 13 bis 21,
**dadurch gekennzeichnet, dass** als Funktionselemente piezoelektrische Keramiken und/oder piezoelektrische Polymere verwendet werden.

23. Verfahren nach einem der Ansprüche 13 bis 22,
**dadurch gekennzeichnet, dass** als Funktionselemente zumindest teilweise Formgedächtnislegierungen verwendet werden.

## Claims

1. Adhesive joint for joining components of means of transport wherein the adhesive joint is built with an adhesive means,
**characterised in that**, the adhesive means comprises:
a first plurality of functional elements adapted to convert a control signal into a mechanical stress within the adhesive joint, and
a second plurality of functional elements adapted to convert a mechanical stress in the adhesive joint into a measuring signal for detecting a state of mechanical loading in the adhesive joint.

2. Adhesive joint according to claim 1,
**characterised in that** contact elements are arranged in the region of the functional elements to supply and/or divert the control signal and/or the measuring signal.

3. Adhesive joint according to claim 1 or 2,
**characterised in that** the control signal and/or the measuring signal can be transmitted contactless.

4. Adhesive joint according to any one of claims 1 to 3,
**characterised in that** the control signal is an electric voltage and/or an electric current.

5. Adhesive joint according to any one of claims 1 to 4,
**characterised in that** the measuring signal is an electric voltage and/or an electric current.

6. Adhesive joint according to any one of claims 1 to 5,
**characterised in that** the control signal is producible in a control and regulation device and/or the measuring signal is supplyable to the control and regulation device.

7. Adhesive joint according to any one of claims 1 to 6,
**characterised in that** the adhesive means is formed with a flat structure.

8. Adhesive joint according to any one of claims 1 to 7,
**characterised in that** the adhesive means is formed with a liquid plastic.

9. Adhesive joint according to any one of claims 1 to 8,
**characterised in that** the functional elements are in the shape of sheets and/or strings.

10. Adhesive joint according to any one of claims 1 to 9,
**characterised in that** the functional elements are formed with piezoelectric ceramics and/or with piezoelectric polymers.

11. Adhesive joint according to any one of claims 1 to 10,
**characterised in that** the functional elements are at least partially formed with shape memory alloys.

12. Adhesive joint according to any one of claims 1 to 11,
**characterised in that** a material thickness is settable by the functional elements.

13. Method for determining a mechanical loading state existing in an adhesive joint, wherein a first plurality of functional elements and a second plurality of functional elements are integrated in the adhesive joint formed by an adhesive means with the steps:
injecting a control signal into the individual functional elements of the first plurality of functional elements,
converting the control signal in the adhesive joint into a mechanical stress with the individual functional elements of the first plurality of functional elements,
converting the mechanical stress in the adhesive joint into a measuring signal with the individual functional elements of the second plurality of functional elements, and
decoupling the measuring signal out of the individual functional elements of the second plurality of functional elements in order to determine the mechanical stress existing in the adhesive joint.

14. Method according to claim 13,
**characterised in that** the control signal is increased until a limit value is reached at which a mechanical stress exists in the adhesive joint guaranteeing a minimum mechanical load capacity of the adhesive joint.

15. Method according to claim 13 or claim 14,
**characterised in that** the control signal is increased until a limit value is reached at which a mechanical stress exists in the adhesive joint exceeding the mechanical strength of the adhesive joint.

16. Method according to any one of claims 13 to 15,
**characterised in that** the control signal is increased until the measuring signal corresponds to a mechanical stress guaranteeing the minimum mechanical load capacity of the adhesive joint.

17. Method according to any one of claims 13 to 16,
**characterised in that** the control signal and/or the measuring signal is transmitted via contact elements arranged in the region of the functional elements.

18. Method according to any one of claims 13 to 17,
**characterised in that** the control signal and/or the measuring signal are transmitted contactless.

19. Method according to any one of claims 13 to 18,
**characterised in that** an electric voltage and/or an electric current is used as the control signal.

20. Method according to any one of claims 13 to 19,
**characterised in that** an electric voltage and/or an electric current is used as the measuring signal.

21. Method according to any one of claims 13 to 20,
**characterised in that** the control signal is generated in a control and regulation device and/or the measuring signal is supplied to the control and regulation device.

22. Method according to any one of claims 13 to 21,
**characterised in that** piezoelectric ceramics and/or piezoelectric polymers are used as functional elements.

23. Method according to any one of claims 13 to 22,
**characterised in that** shape memory alloys are used as functional elements at least partially.

## Revendications

1. Assemblage collé destiné à assembler des pièces de construction de moyens de transport, l'assemblage étant réalisé avec un agent adhésif,
**caractérisé en ce que** l'agent adhésif comprend:
- une première pluralité d'éléments fonctionnels, qui sont aménagés pour convertir un signal de commande en une tension mécanique à l'intérieur de l'assemblage collé, et
- une seconde pluralité d'éléments fonctionnels, qui sont aménagés pour convertir une tension mécanique à l'intérieur de l'assemblage collé en un signal de mesure destiné à capter un état de charge mécanique dans l'assemblage collé.

2. Assemblage collé selon la revendication 1,
**caractérisé en ce que** des éléments de contact sont disposés dans la zone des éléments fonctionnels pour acheminer et/ou dériver le signal de commande et/ou le signal de mesure.

3. Assemblage collé selon la revendication 1 ou 2,
**caractérisé en ce que** le signal de commande et/ou le signal de mesure peuvent être transmis sans contact.

4. Assemblage collé selon l'une des revendications 1 à 3,
**caractérisé en ce que** le signal de commande est une tension électrique et/ou un courant électrique.

5. Assemblage collé selon l'une des revendications 1 à 4,
**caractérisé en ce que** le signal de mesure est une tension électrique et/ou un courant électrique.

6. Assemblage collé selon l'une des revendications 1 à 5,
**caractérisé en ce que** le signal de commande peut être généré dans un dispositif de commande ou de régulation et/ou le signal de mesure peut être amené au dispositif de commande ou de régulation.

7. Assemblage collé selon l'une des revendications 1 à 6,
**caractérisé en ce que** l'agent adhésif est réalisé avec une structure surfacique.

8. Assemblage collé selon l'une des revendications 1 à 7,
**caractérisé en ce que** l'agent adhésif est réalisé avec une matière synthétique liquide.

9. Assemblage collé selon l'une des revendications 1 à 8,
**caractérisé en ce que** les éléments fonctionnels sont réalisés sous forme de plaques et/ou sous forme de bandes.

10. Assemblage collé selon l'une des revendications 1 à 9,
**caractérisé en ce que** les éléments fonctionnels sont réalisés avec des céramiques piézoélectriques et/ou des polymères piézoélectriques.

11. Assemblage collé selon l'une des revendications 1 à 10,
**caractérisé en ce que** les éléments fonctionnels sont réalisés partiellement avec des alliages à mémoire de forme.

12. Assemblage collé selon l'une des revendications 1 à 11,
**caractérisé en ce qu'**une épaisseur de matériau de l'agent adhésif est réglée au moyen des éléments fonctionnels.

13. Procédé pour détecter un état de charge mécanique régnant dans un assemblage collé, une première pluralité d'éléments fonctionnels et une seconde pluralité d'éléments fonctionnels étant intégrés dans un assemblage collé réalisé avec un agent adhésif, comportant les étapes:
- couplage d'un signal de commande dans les différents éléments fonctionnels de la première pluralité d'éléments fonctionnels;
- conversion du signal de commande à l'intérieur de l'assemblage collé en une tension mécanique avec les différents éléments fonctionnels de la première pluralité d'éléments fonctionnels;
- conversion de la tension mécanique dans l'assemblage collé en un signal de mesure avec les différents éléments fonctionnels de la seconde pluralité d'éléments fonctionnels;
- découplage du signal de mesure des éléments fonctionnels de la seconde pluralité d'éléments fonctionnels, afin de déterminer la tension mécanique régnant dans l'assemblage collé.

14. Assemblage collé selon la revendication 13,
**caractérisé en ce que** le signal de commande est augmenté jusqu'à ce que soit atteinte une valeur limite, à laquelle règne dans l'assemblage collé une tension mécanique qui assure une capacité de charge mécanique minimale de l'assemblage collé.

15. Assemblage collé selon la revendication 13 ou 14,
**caractérisé en ce que** le signal de commande est augmenté jusqu'à ce que soit atteinte une valeur limite, à laquelle règne dans l'assemblage collé une tension mécanique qui dépasse une résistance mécanique de l'assemblage collé.

16. Assemblage collé selon l'une des revendications 13 à 15,
**caractérisé en ce que** le signal de commande est augmenté jusqu'à ce que le signal de mesure corresponde à une tension mécanique qui assure une capacité de charge mécanique minimale de l'assemblage collé.

17. Assemblage collé selon l'une des revendications 13 à 16,
**caractérisé en ce que** le signal de commande et/ou le signal de mesure sont transmis par l'intermédiaire d'éléments de contact disposés dans la zone des éléments fonctionnels.

18. Assemblage collé selon l'une des revendications 13 à 17,
**caractérisé en ce que** le signal de commande et/ou le signal de mesure sont transmis sans contact.

19. Assemblage collé selon l'une des revendications 13 à 18,
**caractérisé en ce qu'**une tension électrique et/ou un courant électrique sont utilisés en tant que signal de commande.

20. Assemblage collé selon l'une des revendications 13 à 19,
**caractérisé en ce qu'**une tension électrique et/ou un courant électrique sont utilisés en tant que signal de mesure.

21. Assemblage collé selon l'une des revendications 13 à 20,
**caractérisé en ce que** le signal de commande est généré dans un dispositif de commande et de régulation et/ou le signal de mesure est amené au dispositif de commande et/ou de régulation.

22. Assemblage collé selon l'une des revendications 13 à 21,
**caractérisé en ce que** des céramiques piézoélectriques et/ou des polymères piézoélectriques sont utilisés comme éléments fonctionnels.

23. Assemblage collé selon l'une des revendications 13 à 22,
**caractérisé en ce que** des alliages à mémoire de forme sont utilisés au moins partiellement comme éléments fonctionnels.
